(19) Europäisches Patentamt
European Patent Office
Office européen des brevets

(11) EP 4 160 305 A1

(12) **EUROPEAN PATENT APPLICATION**

(43) Date of publication:
**05.04.2023 Bulletin 2023/14**

(21) Application number: **21200184.6**

(22) Date of filing: **30.09.2021**

(51) International Patent Classification (IPC):
***G02F 1/21*** (2006.01) ***C07D 333/38*** (2006.01)
***C08F 232/08*** (2006.01) ***G02F 1/361*** (2006.01)

(52) Cooperative Patent Classification (CPC):
**G02F 1/212; G02F 1/3611; G02F 1/3615**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Universiteit Antwerpen**
**2000 Antwerpen (BE)**

(72) Inventors:
- **WENSELEERS, Wim**
  **Sint-Katelijne-Waver (BE)**
- **CAMPO, Jochen**
  **Schoten (BE)**
- **VAN BEZOUW, Stein**
  **Langdorp (BE)**
- **PIA, Valentina**
  **Edegem (BE)**
- **MANICI, Valentina**
  **Ludwigshafen am Rhein (DE)**

(74) Representative: **DenK iP bv**
**Leuvensesteenweg 203**
**3190 Boortmeerbeek (BE)**

# (54) ACTIVE LAYERS FOR SECOND-ORDER NONLINEAR OPTICAL APPLICATIONS

(57) In a first aspect, the present invention relates to a second-order nonlinear optical device, comprising (i) an active layer and (ii) an electric field generator. The active layer comprises (ia) a matrix material, and (ib) second-order nonlinear optical chromophores dispersed in the matrix material. Each chromophore has a conjugated system comprising at least a first nitrogen atom connected to a second nitrogen atom via a conjugated path and a positive charge localized on one of the nitrogen atoms. Moreover, the chromophore is switchable between a first state in which the positive charge is localized on the first nitrogen atom and a second state in which the positive charge is localized on the second nitrogen atom, and under thermal equilibrium both states are populated. The electric field generator is for switching at least some of the chromophores from the first state to the second state or from the second state to the first state, or to reorient at least some of the chromophores.

FIG 1

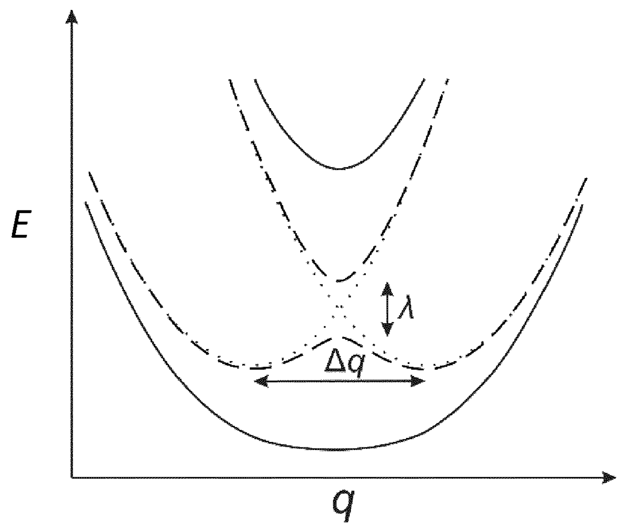




Processed by Luminess, 75001 PARIS (FR)

## Description

### Technical field of the invention

The present invention relates to the field of nonlinear optics; more specifically, to active layers for second-order nonlinear optical applications.

### Background of the invention

The field of organic second-order nonlinear optics has always been dominated by asymmetrically substituted chromophores. This results from general symmetry considerations preventing even-order nonlinear optical effects to occur in a centrosymmetric system. Herein, the asymmetrically substituted chromophore typically comprises a conjugated (i.e., $\pi$-conjugated) path that connects an electron donor group to an electron acceptor group (push-pull system). The second-order nonlinear optical response-also known as the first hyperpolarizability $\beta$-of a chromophore is usually optimized, e.g., maximized, by appropriate choice of the donor and the acceptor group. Higher responses are ever preferred, as they increase the generated signal, and reduce the energy needed for devices comprising the chromophores. Apart from such asymmetrically substituted push-pull chromophores, chromophores having octupolar symmetry have been considered for second-order nonlinear optics. Octupolar chromophores, for example, could be rotor-shaped molecules comprising a central donor or acceptor group bonded to three acceptor groups or three donor groups, respectively. However, due to practical concerns on how to implement such octupolar chromophores in devices, the focus of the field remains mostly on push-pull chromophores. Thereby, the room for improvement in the design of second-order linear optical chromophores is at present severely limited. It would be advantageous if additional design routes to optimize the second-order nonlinear optical response of chromophores were identified.

In addition, the use of asymmetrically substituted chromophores in second-order nonlinear optical devices is far from straightforward. In particular, the macroscopic ordering of these chromophores remains a fundamental problem. Asymmetrically substituted chromophores have a large dipole moment. Whenever a crystal is grown of chromophores with a large dipole moment, dipole-dipole interactions favour an ordering wherein neighbouring chromophores tend to order in anti-parallel orientation. Thereby, a centrosymmetric material is often formed, wherein the second-order nonlinear optical responses of chromophores cancel each other out, resulting in a zero macroscopic second-order nonlinear optical response. Alternatively, asymmetrically substituted chromophores may be dispersed in a polymer film, wherein, the film is typically heated while applying an electric field over the film, thereby orienting the chromophores anisotropically, after which the film is cooled to "freeze" the chromophores in their respective orientation within the film. The lifetime of said orientation is, however, limited.

There is thus still a need in the art for devices and methods that address at least some of the above problems.

### Summary of the invention

It is an object of the present invention to provide good devices for second-order nonlinear optical applications. It is a further object of the present invention to provide good methods and uses associated therewith. This objective is accomplished by devices, methods and uses according to the present invention.

It is an advantage of embodiments of the present invention that a new class of chromophores is introduced in the field of second-order nonlinear optics, thereby enabling a new way of optimizing organic chromophores for second-order nonlinear optical applications.

It is an advantage of embodiments of the present invention that the second-order nonlinear optical response of these chromophores may be particularly large (e.g., larger than the response of classical push-pull chromophores according to the state of the art). It is a further advantage of embodiments of the present invention that a device comprising the chromophores may have a large macroscopic response. It is yet a further advantage of embodiments of the present invention that the device requires, e.g., a low power usage.

It is an advantage of embodiments of the present invention that ordering of the chromophores within a film of the device may be straightforward. It is an advantage of embodiments of the present invention that anisotropy may be induced in the film by the application of an electric field over the film.

It is an advantage of embodiments of the present invention that the macroscopic second-order nonlinear optical response of the device may be inverted (e.g., by applying an inverted electric field over the film).

In a first aspect, the present invention relates to a second-order nonlinear optical device, comprising (i) an active layer and (ii) an electric field generator. The active layer comprises (ia) a matrix material, and (ib) second-order nonlinear optical chromophores dispersed in the matrix material. Each chromophore has a conjugated system comprising at least a first nitrogen atom connected to a second nitrogen atom via a conjugated path and a positive charge localized on one of the nitrogen atoms. Moreover, the chromophore is switchable between a first state in which the positive charge

is localized on the first nitrogen atom and a second state in which the positive charge is localized on the second nitrogen atom, and under thermal equilibrium both states are populated. The electric field generator is for switching at least some of the chromophores from the first state to the second state or from the second state to the first state, or to reorient at least some of the chromophores.

In a second aspect, the present invention relates to a method for using the second-order nonlinear optical device according to embodiments of the first aspect, comprising:

(a) applying an electric field across the active layer so as to switch at least some of the chromophores from the first ground state to the second ground state or from the second ground state to the first ground state, or so as to reorient at least some of the chromophores; and (b) transmitting an electromagnetic wave through the active layer.

In a third aspect, the present invention relates to a use of an active layer for second-order nonlinear optical applications. The active layer comprises: (ia) a matrix material, and (ib) second-order nonlinear optical chromophores dispersed in the matrix material. Each chromophore has a conjugated system comprising at least a first nitrogen atom connected to a second nitrogen atom via a conjugated path and a positive charge localized on one of the nitrogen atoms. Moreover, the chromophore is switchable between a first state in which the positive charge is localized on the first nitrogen atom and a second state in which the positive charge is localized on the second nitrogen atom, and under thermal equilibrium both states are populated.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

## Brief description of the drawings

FIG 1 is a schematic energy level diagram as a function of nuclear coordinates q.

FIG 2 is a series of plots of the second-order nonlinear optical response as dependent on wavelength, fitted $\beta$ dispersion model curves and the absorption spectra, of a series of cyanines.

FIG 3 is a series of plots of absorption bands, and fits to the absorption bands, for a series of cyanines.

FIG 4 is the static first hyperpolarizability of cyanines and classical nonlinear optical chromophores as a function of conjugated path length.

FIG 5 is a schematic representation of a vertical cross-section of part of a second-order nonlinear optical device according to embodiments of the present invention.

FIG 6 and FIG 7 are schematic representations of a vertical cross-section of an active layer.

FIG 8 is a schematic representation of an electro-optical modulator according to embodiments of the present invention.

In the different figures, the same reference signs refer to the same or analogous elements.

## Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described

or illustrated herein.

Moreover, the terms top, bottom, over, under and the like in the description and in the claims are used for descriptive purposes and not necessarily for describing relative positions. It is to be understood that the terms so used are interchangeable with their antonyms under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. Thus, the scope of the expression "a device comprising means A and B" should not be interpreted as being limited to devices consisting only of components A and B. It means that with respect to the present invention, the only relevant components of the device are A and B.

Similarly, it is to be noticed that the term "coupled", also used in the claims, should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practised without these specific details. In other instances, well-known methods, structures and techniques have not been shown in detail in order not to obscure an understanding of this description.

The following terms are provided solely to aid in the understanding of the invention.

As used herein, and unless otherwise specified, a state of a chemical entity (e.g., a chromophore) is said to be populated when at least 3% of (the total number of) said chemical entities in the system are in that state, preferably at least 4%, more preferably at least 5%, yet more preferably at least 7%, still yet more preferably at least 10%, most preferably at least 20%. Under thermal equilibrium, the distribution of the chemical entities over the energy states accessible to them is typically governed by the Boltzmann distribution:

$$\frac{N_i}{N_j} = \frac{e^{-\varepsilon_i/kT}}{e^{-\varepsilon_j/kT}} = e^{\Delta E/kT} \text{ and } \frac{N_i}{N} = \frac{e^{-\varepsilon_i/kT}}{\sum_{j=1}^{M} e^{-\varepsilon_j/kT}},$$

with $N_i$ and $N_j$ the number of the chemical entities in respectively the i-th and j-th state, $N$ the total number of the chemical entities in the system, $\varepsilon_i$ and $\varepsilon_j$ the energy of respectively the i-th and j-th state, $\Delta E$ the energy difference between the i-th and j-th state (i.e., $\varepsilon_j - \varepsilon_i$), $k$ the Boltzmann constant, $T$ the temperature and M the total number of accessible states. For a system in which-in first approximation-only two states are accessible to the chemical entity (e.g., the first and

second state of the chromophore; cf. infra), $N = N_1 + N_2$ and the second equation above becomes:

$$\frac{N_2}{N} = \frac{e^{-\varepsilon_2/kT}}{e^{-\varepsilon_1/kT} + e^{-\varepsilon_2/kT}} = \frac{1}{1 + e^{\Delta E/kT}}.$$

Accordingly, the energy difference $\Delta E$ between the first and second state of the chromophore may be equal to or smaller than $3kT$ (i.e., 95.3% in the first state and 4.7% in the second state), preferably equal to or smaller than $2kT$ (i.e., 88.1% in the first state and 11.9% in the second state), more preferably equal to or smaller than $kT$ (i.e., 73.1% in the first state and 26.9% in the second state).

As used herein, and unless otherwise specified, a second-order nonlinear optical chromophore is a molecular entity or a part of a molecular entity that is second-order nonlinear optically active. A second-order nonlinear optical small molecule may for example typically comprise (e.g. consist of) a single chromophore. Conversely, e.g., in a polymer with second-order nonlinear optical side groups, the side groups may typically comprise (e.g. consist of) one chromophore each, so that the polymer comprises a plurality of chromophores.

In a first aspect, the present invention relates to a second-order nonlinear optical device, comprising (i) an active layer and (ii) an electric field generator. The active layer comprises (ia) a matrix material, and (ib) second-order nonlinear optical chromophores dispersed in the matrix material. Each chromophore has a conjugated system comprising at least a first nitrogen atom connected to a second nitrogen atom via a conjugated path and a positive charge localized on one of the nitrogen atoms. Moreover, the chromophore is switchable between a first state in which the positive charge is localized on the first nitrogen atom and a second state in which the positive charge is localized on the second nitrogen atom, and under thermal equilibrium both states are populated. The electric field generator is for switching at least some of the chromophores from the first state to the second state or from the second state to the first state, or to reorient at least some of the chromophores.

As noted above, whether both states are populated under thermal equilibrium is a matter of the energy level of these states and-if present-any other accessible states; and more in particular of the energy difference between these two states as such and-if present-these states and any other accessible states. In embodiments, at least one of the first and second states may typically be a ground state (e.g., the first state may be a ground state). The other state may also be a ground state or may be a low-lying excited state (e.g., the second state may be a ground state or a low-lying excited state). In embodiments, the energy difference $\Delta E$ between the first and second state may be equal to or smaller than $3kT$, preferably equal to or smaller than $2kT$, more preferably equal to or smaller than $kT$ (cf. supra). In embodiments, the thermal equilibrium (and thus T) may be at a temperature of 300 °C or below, preferably between -200 and 200 °C, more preferably between -100 and 100 °C, yet more preferably between -20 and 50 °C, still yet more preferably between 0 and 40 °C, most preferably between 15 and 30 °C, such as 20 or 25 °C.

In turn, the magnitude of the energy difference $\Delta E$ between the first and second state is typically linked to their degree of symmetry. Indeed, if the first and second state are substantially symmetrical (mirror symmetrical or centrosymmetrical; cf. infra), their energy difference will typically be fairly small. In extremis, if the first and second state are perfectly symmetrical (mirror symmetrical or centrosymmetrical), their energy levels will generally be degenerate (e.g., both will be a ground state) and the energy difference will be zero. In preferred embodiments, the second state may thus be mirror symmetric to or rotationally superimposable on the first state. In other words: a superposition of the first and second state may be mirror symmetric or centrosymmetric.

As was previously described in the background section, it is well-known in the art that general symmetry considerations prevent even-order nonlinear optical effects to occur in a centrosymmetric system. Although this strictly speaking only applies to centrosymmetry, most chromophores typically tend towards an elongated shape, resulting in their even-order nonlinear optical behaviour being largely dominated by the longitudinal direction, with little or no contribution from the directions perpendicular thereto. As such, the same consideration applies substantially also to mirror symmetric chromophores. For that reason, classical second-order nonlinear optical chromophores are typically push-pull type, comprising a conjugated path that is asymmetrically substituted (typically at the distal ends) with a (strong) electron donor group and a (strong) electron acceptor group. This is in stark contrast to the substantially symmetrical chromophores (e.g., substantially symmetrically substituted) as used in the present invention (cf. supra), which have-not in the least because of the aforementioned symmetry considerations-herebefore never been considered in the prior art for second-order nonlinear optical applications. Nevertheless, the latter were surprisingly found to have nonnegligible-and even very high-first hyperpolarizabilitiy values, as will be described in more detail below.

The chromophores of the present invention comprise a positive charge. In some embodiments, a molecular entity comprising the chromophore (e.g., the chromophore as such) may be a cation. This is for example typically the case for cyanines. In other embodiments, the chromophore may comprise a strong electron acceptor group. In these embodiments, the positive charge may be the result of charge separation within the molecular entity comprising the chromophore (e.g., within the chromophore as such). This is for example typically the case for squaraines. The chromophore further has two (low-lying) states in which the positive charge is localized respectively on one or the other of its nitrogen atoms. For ease of explanation, the effect of the charge localization will now be further explained using cyanine chromophores as an example. However, the present invention is not limited to cyanines: indeed, the inventors have unexpectedly found that also other types of chromophores (e.g., squaraines) exhibit this effect of charge localization on one of the nitrogen atoms and may have a surprisingly large second order nonlinear optical response as well (see, e.g., Example 1 below).

In a traditional picture, cyanine dye chromophores are characterized by a symmetric structure, and are therefore supposed to exhibit no second-order nonlinear optical response or a zero first hyperpolarizability $\beta$ (cf. supra). This symmetrical structure is described as a superposition of two equivalent resonance forms with the electric charge located at either of both (identical) ends of the chromophore and all double bonds shifted along the chain (which is here shown for an exemplary cyanine dye chromophore):

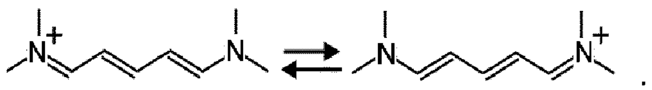

FIG 1 shows a schematic energy level diagram as a function of nuclear coordinates q for this exemplary cyanine. Herein, each of the resonance forms above is represented by a dotted line. The superposition of the resonance forms results in a symmetrical ground state structure with the charge delocalized equally over both ends, with all bonds in the conjugated bridge of equal length:

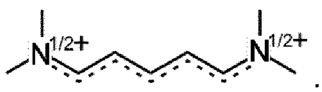

This situation is indicated in by the solid line in FIG 1: mixing of the forms results in a potential energy surface with a single minimum. This situation is predicted to result in zero $\beta$, e.g., by the Bond Length Alternation (BLA) model (MARDER, Seth R., et al. A unified description of linear and nonlinear polarization in organic polymethine dyes. Science, 1994, 265.5172: 632-635).

Without being bound by theory, the proposed concept is that one of both resonance forms can become stabilized through coupling between electronic and nuclear motion (vibronic coupling), possibly further assisted by the reaction field of the surrounding matrix. Furthermore, the electronic mixing ($\lambda$) between both resonance forms may be weak. This results in a spontaneous breaking of the chromophore symmetry and consequently in a double-well (ground state) potential, as shown by the dashed line in FIG 1. Herein, a first minimum in the double-well (ground state) potential corresponds to the fist state of the chromophore, and a second minimum corresponds to the second state of the chromophore. FIG 1 and the aforementioned apply to 'perfectly symmetric' chromophores-so that the first and second state are degenerate (and are thus generally equally populated when in thermal equilibrium)-, but the same principle can be extended to 'slightly asymmetric' (i.e., 'substantially symmetric') chromophores: in that case, the first and second states are typically no longer degenerate, rather their energy levels are (slightly) shifted with respect to one another. Accordingly, the lower lying state will then under thermal equilibrium be-scaling with the energy gap between both-more populated than the higher lying state.

A similar concept of symmetry collapse in extended cyanine chromophores and related systems has been predicted theoretically in the context of linear optics, and experimental indications for this effect have been obtained from linear spectroscopy (TOLBERT, Laren M.; ZHAO, Xiaodong. Beyond the cyanine limit: Peierls distortion and symmetry collapse in a polymethine dye. Journal of the American Chemical Society, 1997, 119.14: 3253-3258). However, such a mechanism was hereto never considered in the context of second-order nonlinear optics; or-should it have been-it was deemed that the relevantly small amount of asymmetry (compared to the quintessential highly asymmetric push-pull systems) introduced thereby would be insufficient to yield a strong second-order nonlinear optical signal. Whatever the case may be, it remains that-to the best of our knowledge-cyanines, or any chromophore as used in embodiments of the present invention, have heretofore never been described or considered in the art as potentially interesting for second-order nonlinear optics (cf. supra).

Nevertheless, the inventors have found that the second-order nonlinear optical response of the chromophores of the present invention is not only non-zero, but is in fact surprisingly large. In several cases, such chromophores even compete with (and surpass) the classical push-pull chromophores that have been optimized over the past decades (see, e.g., Example 1 below), unexpectedly making them highly interesting for second-order nonlinear optical applications. Without being bound by theory, it is believed that the double-well potential (cf. supra) associated with the close-lying first and second state overall results in a 'broad bottomed' potential profile that is very conducive to second-order nonlinear optical effects-and thus to elevated hyperpolarizabilities $\beta$.

Accordingly, note that-although it is induced by the chromophore being substantially symmetric-it is ultimately the potential profile and thus the relative location of the first and second state's energy levels that govern the desired second-order nonlinear optical behaviour. As such, it is in general not needed to try and specify (e.g. quantify) "substantially symmetric": if the first and second state are thermally accessible (as evidenced by them being both populated under thermal equilibrium) then they will be located close enough to generate the desired effect. Whether both states are populated under thermal equilibrium can typically be determined directly or indirectly in various ways. For example, it can be indirectly deduced from the strength of the electric field needed to switch the chromophores from the first state to the second state or vice versa, provided one waits long enough to reach equilibrium. Indeed, the latter is thermodynamically related to the energy gap between both (but to the energy barrier between both when under kinetic control). Alternatively, it can be deduced from nuclear magnetic resonance (NMR) measurements; especially advanced NMR-such as 2D NMR and/or nitrogen-15 ($^{15}N$)-NMR-may be useful in this respect.

The aforementioned not withstanding, one can nevertheless attempt to do so; provided one interprets the results critically. For example, one can in embodiments define two 'halves' of the chromophore and theoretically calculate (e.g., using MOPAC with the PM7 Hamiltonian) their ionisation potential. If said ionisation potentials for both halves are similar (e.g., differing by less than 0.45 eV from each other, preferably 0.40 eV, more preferably 0.35 eV, yet more preferably 0.30 eV), this gives an indication that the two halves are substantially symmetrical. Defining the two halves in this respect may be done using the following protocol: (a) dividing the conjugated path into two fractions by making a plane cut midway between said nitrogen atoms (i.e., so that the cutting plane is perpendicular to-and comprises the midpoint of-the line segment having the two nitrogen atoms as its endpoints). And then for each fraction: (b) removing any partial atoms and bonds thereto, (c) shifting-if needed (typically this will be needed for one of the fractions, while it will already be the case for the other)-the alternating single and double bonds of the conjugated path so that the bond thereof connecting to the nitrogen atom is a single bond, and (d) completing any dangling bonds by adding a hydrogen substituent. Note however that the results of such a theoretical calculation should not be simply taken at face value and should be evaluated critically: indeed, in certain exotic cases two halves which the skilled person will readily see to be clearly very asymmetrical, may accidentally still yield ionisation potentials which are close to one another. As such, this approach should typically only be used where there is reasonable doubt on whether the halves are substantially symmetrical. In some cases, e.g. wherein the chromophore is attached to a backbone, the sidechain implanted on the atoms making up the conjugated system of the chromophore may be exceedingly long, but have little or no impact on the electronic structure (and thus the ionisation potential) of the chromophore as such or its halves. Although the chromophore then strictly does not comprise these sidechains in their entirety-but only those parts thereof which contribute to the second-order nonlinear optical activity of the chromophore-it can nevertheless be useful to define a straightforward and universally applicable way to deal with such sidechains. This can for example be done by cutting off any sidechain after a predetermined length (e.g., 3, 4, 5, 6, 7, 8, 9 or 10) from the atom it is implanted on and that is part of the conjugated system, and completing any dangling bonds by adding a hydrogen substituent. Such a step can for example be performed before step a in the above protocol.

Alternatively to the ionisation potential of the chromophore halves, one could try to determine (theoretically-e.g. also using MOPAC-or experimentally) the dipole moments of the first and second state and compare them to determine whether they are substantially the same (but in opposite directions). For example, for a dipole moment $\overline{\mu_{0,1}}$ in the first state and a dipole moment $\overline{\mu_{0,2}}$ in the second state, it may be evaluated whether:

$$\frac{\left\|\overrightarrow{\mu_{0,1}}+\overrightarrow{\mu_{0,2}}\right\|}{\left\|\overrightarrow{\mu_{0,1}}\right\|+\left\|\overrightarrow{\mu_{0,2}}\right\|} \leq 0.1.$$

However, accessing these dipole moments sufficiently accurately is typically not trivial. As such, the results obtained therefore should not be used blindly, but should again be evaluated critically as to whether or not they are sufficiently accurate to allow for such a comparison.

In embodiments, the chromophore may comprise only a single conjugated system. In other words, the conjugation in the chromophore may, e.g., not be interrupted by a saturated bond. In embodiments, the active layer may comprise the chromophores bonded, e.g., via a saturated bond, to a backbone (e.g., of a polymer). In embodiments, two or more of the chromophores may be covalently attached (i.e., bonded; e.g. via a saturated bond) to a common backbone. Herein, the backbone and the chromophore are typically different from each other and do not generally form part of a mutually shared conjugated system. In embodiments, the chromophores may be directly covalently attached to the common backbone, or they may be indirectly (e.g., through an intermediate linker) covalently attached to the common backbone. In embodiments, the common backbone may be that of a polymer. The polymer may be the matrix material. It is an advantage of these embodiments that movement of the chromophores in the matrix material may be

limited. Thereby, stacking of the chromophores may be prevented. In embodiments, the chromophores dispersed in the matrix material may be ensembles of chromophores dispersed in the matrix material. For example, several chromophores may be stacked together in, e.g., a nanotube-forming an ensemble-and several such nanotubes may be dispersed in the matrix material. In such a case, the stacking in, e.g., the nanotube may be such that a favourable stacking is achieved (i.e., the output of the chromophores in the stack combines constructively instead of destructively).

The conjugated path may comprise any type of atoms. Often, the conjugated path consists of carbon atoms and/or nitrogen atoms. Herein, the nitrogen atoms may comprise further nitrogen atoms other than the first and second nitrogen atom, but coupled to the first and second nitrogen atom. In embodiments, the conjugated path may comprise a series of unsaturated carbon atoms. It is an advantage of embodiments of the present invention that chromophores having a conjugated path comprising a series of unsaturated carbon atoms (e.g., cyanines and squaraines) are widely-e.g., commercially-available. Where there is more than one conjugated path between the nitrogen atoms-e.g. because the conjugated system comprises one or more ring structures-, the selection of 'the' conjugated path is typically not critical. Notwithstanding, one may in such instances for example select (one of) the shortest conjugated path(s) as 'the' conjugated path.

In embodiments, the conjugated path (e.g., the shortest conjugated path between the two nitrogen atoms; not to be confused with the full conjugated system comprising said nitrogen atoms, which may extend beyond said conjugated path) may comprise an uneven number of atoms. This is typically the case for cyanines in accordance with under the present invention. In embodiments, the conjugated path may comprise at least seven atoms, preferably at least nine atoms, more preferably at least eleven atoms. For example, the conjugated path could comprise up to 20, up to 30, up to 50 or up to 100 atoms. The effect of spontaneous symmetry breaking tends to be more pronounced for chromophores, e.g., cyanines, having a long conjugated path length. Furthermore, the inventors have found that the second-order nonlinear optical response strongly increases with conjugation path length.

In embodiments, the first nitrogen and/or the second nitrogen may be part of an aromatic group. It is an advantage of these embodiments that the aromatic group may further stabilize the positive charge on the nitrogen atom that is part of the aromaticgroup. Thereby, the localization on the nitrogen atom may be facilitated, e.g., induced. Furthermore, the localization may be more stable. Thereby, random switching, e.g., thermally induced switching, between both states of the chromophore may be limited.

In embodiments, the chromophore may comprise a cyanine or a squaraine, preferably a cyanine. In embodiments, the cyanine may for example have a general chemical formula given by:

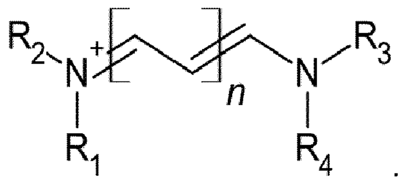

Herein, the N atoms of the chemical formula are the first and second nitrogen atoms, and the $[CH{=}CH]_nCH$ is the conjugated path. In embodiments, the conjugated path may be substituted. For example, one or more of the hydrogen atoms bonded to the unsaturated carbon atoms in the conjugated path may be replaced with a substituent. Each of the substituents may be selected independently from the others. In embodiments, the substituent may comprise a saturated or unsaturated hydrocarbon group and/or heteroatoms, preferably a hydrocarbon group. In some embodiments, the substituent may extend the conjugated system of the conjugated path (cf. infra). A substituent bonded to a first unsaturated atom of the conjugated path may be bonded to a substituent on a second unsaturated atom of the conjugated path and/or to one of the R groups bonded to one of the nitrogen atoms; thereby e.g. forming a ring structure. In some embodiments, one or more CR (e.g. CH) groups in said conjugated path may each be replaced by a further nitrogen atom (cf. supra). The cyanine may typically further comprise a (typically negatively charged) counterion, as are well known in the art. At least in theory, it is possible that the counterion (e.g., a bulky counteraction that only move slowly through the matrix) may further promote spontaneous symmetry breaking: the counterion may be present closer to one of the two nitrogen atoms. The positive charge may therefore be more preferably localized on the one of the two nitrogen atoms, and remain there due to attractive interaction between the negative charge of the counterion and the positive charge of the cyanine. However,-to date-no concrete experimental indication for such an effect has been observed by the inventors. Furthermore, such a counterion is not essential for the present invention: for example, spontaneous symmetry breaking was also observed for squaraines, or the cyanine may be zwitterionic (e.g., may have a covalently connected negatively charged group).

In embodiments, the squaraine may comprise bisubstituted 3-oxocyclobut-1-enolate. In embodiments, the squaraine may for example have either one of the following general chemical formulas:

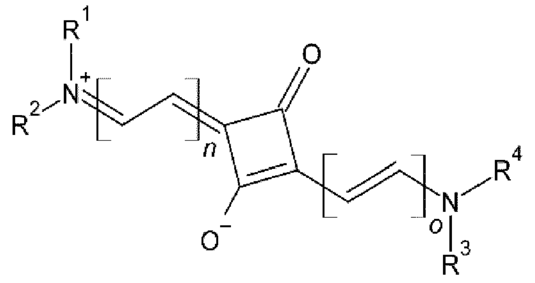

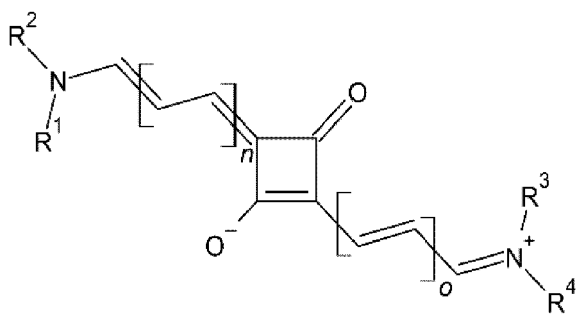

.

In embodiments, n may be equal to o; the invention is, however, not limited thereto. Herein, the N atoms are the first and second nitrogen atom and the 3-oxocyclobut-1-enolate group at the centre of the squaraine typically comprises part of the conjugated path. The conjugated path typically contains only one of the two carbon atoms bonded to oxygen of the 3-oxocyclobut-1-enolate group. In embodiments, the conjugated path may be substituted. For example, one or more of the hydrogen atoms bonded to the unsaturated carbon atoms in the conjugated path may be replaced with a substituent. Each of the substituents may be selected independently from the others. The substituent may be as described above for the substituents for the cyanine.

In embodiments, the full conjugated system may extend beyond the conjugated path as such; and thus, e.g., comprise at least a part of $R_1$, $R_2$, $R_3$ and/or $R_4$ in the above chemical structures. In embodiments, (a part of) the conjugated structure extending beyond the first nitrogen may be identical to (a part of) the conjugated structure extending beyond the second nitrogen. For example, $R_1$ and/or $R_2$ may comprise the conjugated structure of $R_3$ and/or $R_4$; or vice versa. In some embodiments, $R_1$ may be the same as $R_3$ or $R_4$, and/or $R_2$ may be the same as $R_3$ or $R_4$. When the chromophore is symmetrical (as opposed to 'substantially symmetrical'), typically $R_1$ is the same as one of $R_3$ and $R_4$, and $R_2$ is the same as the other of $R_3$ and $R_4$. In embodiments, atoms bonded to the first and second nitrogen atoms may be carbon, hydrogen or heteroatoms (e.g., N, O, S or P), preferably carbon or hydrogen. In embodiments, $R_1$, $R_2$, $R_3$, and $R_4$ may comprise carbon atoms, hydrogen atoms and/or heteroatoms (e.g., N, O, S or P), preferably they may consist of carbon and/or hydrogen atoms. In embodiments, at least two of the R groups (i.e., $R_1$, $R_2$, $R_3$ and $R_4$) may be bonded to each other, e.g., thereby forming a heterocyclic system comprising N, $R_1$ and $R_2$, or N, $R_3$ and $R_4$. In embodiments, at least one of the first and second nitrogen atoms, and possibly part of the full conjugated system, may form part of a heterocyclic system, such as imidazole, pyridine, pyrrole, quinoline or thiazole.

The second-order nonlinear optical chromophores are dispersed in the matrix material of the active layer. The chromophores are typically randomly distributed and randomly oriented within the active layer. Before application of an electric field by the electric field generator, within each chromophore, there is typical-at least in the case of two degenerate states-no preference on which nitrogen atom the positive charge is localized. Thereby, the positive charge within each chromophore within the active layer is randomly located on either nitrogen atom, and the active layer may be isotropic. Moreover, even if the states are not degenerate and thus one is favoured over the other, the chromophore-and thus both nitrogens-is nevertheless typically randomly oriented in the active layer, so that it can still be isotropic. When the active layer is isotropic, the second-order nonlinear optical response of all chromophores may add up to zero. For example, a first chromophore-inversely orientation to a second chromophore in the active layer-has a second-order nonlinear optical response that is inverse to the second-order nonlinear optical response of the second chromophore, so that the sum of both contributions is zero.

Preferably, the chromophores are separated from each other by the matrix material. Preferably, the chromophores may not interact with each other, and may not form stacks. Uncontrolled stacking may disturb the localization of the charge. For example, when two of the chromophores are stacked randomly, the positive charges on the two chromophores may typically repel each other. Thereby, the positive charge may become localized in the chromophores on different ends, such that the two chromophores are anti-symmetrical to each other. As a result, the second-order nonlinear optical response of the chromophores may cancel each other, i.e., add up to zero. In embodiments, a fraction of chromophores contacting another of the chromophores may be lower than 10 mol-%, such as lower than 1 mol-%.

In embodiments, the electric field generator may be for applying a DC electric field. The electric field may be applied by the electric field generator over the active layer. Thereby, the positive charge on at least some of the chromophores moves, within the chromophore, from one of the nitrogen atoms, in the direction of the field, to another of the nitrogen atoms, e.g., towards one side of the layer. Equivalently, at least some of the chromophores in the active layer are switched from the first state to the second state or from the second state to the first state. This may occur by the chromophore moving over an energy barrier separating the first from the second state. In other words, the chromophore switches from a first minimum to the second minimum in the double-well potential of FIG 1. Due to the movement of

positive charges within the chromophores in the direction of the field, e.g., towards one side of the active layer, the active layer is no longer isotropic. The second-order nonlinear optical response of the chromophores in the layer may no longer cancel each other, i.e., no longer add up to zero. The second-order nonlinear optical response of the active layer (i.e., the sum of the second-order nonlinear optical response of all chromophores in the active layer) may thereby typically be sufficiently large for second-order nonlinear optical applications. It is an advantage of embodiments of the present invention that the chromophores do not have to be rotated within the active layer to obtain a sufficiently large second-order nonlinear optical response for the active layer. Switching of the chromophores from the first state to the second state or from the second state to the first state may be fast, e.g., within picoseconds. In comparison, rotation of the chromophores in the matrix material, e.g., a polymer, typically occurs on a much larger time scale. Moreover, applying an electric field in a first direction typically yields a first second-order nonlinear optical response, while applying an electric field in an opposite second direction typically yields a second-generally not equal-second-order nonlinear optical response. One active layer can thus advantageously yield multiple second-order nonlinear optical responses, depending on the electric field that is applied. For example, it can yield the above first and second response, and optionally no response (when the sum of individual responses adds up to zero); or may even be tweaked more or less continuously between two extremes, if the electric field can be applied such that-e.g. depending on the applied field strength-some but not all chromophores may switch states towards the applied direction.

In some embodiments, the chromophore may be rotatable in the active layer. For example, the matrix material may be a polymer. In that case, the polymer may be heated above its glass temperature. On application of the electric field, the chromophores may be rotated, thereby inducing ordering of the chromophores within the active layer. Alternatively, the matrix material may be a fluid (e.g. a gas or liquid, such as a solvent), in which case the chromophore can freely rotate therein at anytime.

In preferred embodiments, the matrix material may comprise a polymer, preferably a polar polymer. Polymers are often used in the field of second-order nonlinear optics as a matrix for chromophores. Polar polymers may further stabilize the localization of the positive charge on one of the nitrogen atoms. In embodiments, the polymer may comprise at least one of the following: poly(ether sulfone), polymethylmethacrylate, amorphous polycarbonate, polyvinylalcohol (e.g., polyvinylphenol), polyethersulfone-methyl ester, and polyethersulfone-hexyl ester. However, the invention may be carried out by any matrix material, and the invention is not limited to polymers.

In embodiments, the device may be an electro-optical modulator or a second harmonic generator.

In embodiments, any feature of any embodiment of the first aspect may independently be as correspondingly described for any embodiment of any of the other aspects.

In a second aspect, the present invention relates to a method for using the second-order nonlinear optical device according to embodiments of the first aspect, comprising: (a) applying an electric field across the active layer so as to switch at least some of the chromophores from the first ground state to the second ground state or from the second ground state to the first ground state, or so as to reorient at least some of the chromophores; and (b) transmitting an electromagnetic wave through the active layer.

In preferred embodiments, the electric field is applied so as to switch (in a controlled way) at least some of the chromophores from the first ground state to the second ground state or from the second ground state to the first ground state. In absence of the electric field, chromophores may also switch (typically in an uncontrolled way) from the first ground state to the second ground state or from the second ground state to the first ground state. As the positive charge may thereby move in either direction, however, and the chromophores are typically randomly oriented, the switching in absence of the electric field generally results in an isotropic active film. That is, there may be a first group of chromophores wherein the positive charge is present on the nitrogen atom closer to one side of the active layer, and a second group of chromophores wherein the positive charge is present closer to the opposite side, wherein the first group and the second group each consist of a substantially equal amount of chromophores. By contrast, the application of the electric field typically serves to generate a preferred direction (e.g. by lowering the energy level of one of the states and raising it for the other), so that the positive charge of at least some of the chromophores preferentially moves in one direction (e.g., towards one side of the active layer) and the active layer becomes anisotropic. This situation may correspond to a situation wherein the first group of chromophores has a substantially different number of chromophores than the second group of chromophores. For example, on the application of the electric field, the number of chromophores in one of the first group or second group may be at least 1% larger, such as at least 5% larger, preferably at least 10% larger, more preferably at least 20% larger, even more preferably at least 50% larger, than the number of chromophores in the other of the first group or second group. Preferably, on the application of the electric field, substantially all chromophores (e.g., 90%, preferably 95%, such as 99% or 100%, of the chromophores in the active layer) are in one of the first or second group. The electric field may moreover serve to keep the chromophores steady in one of the states (e.g., through increasing the energy gap between both states) and thereby stabilize a situation wherein there are substantially more chromophores in the first group than in the second group.

In some embodiments, the electric field may be switched off before step b. In particular when the first and second states have a long lifetime, the electric field need not be maintained. Switching off the electric field may advantageously limit energy consumption. Furthermore, the risk that the applied electric field interferes detrimentally with the functioning of the second-order nonlinear optical device is then advantageously lowered. For example, the applied electric field could otherwise potentially interact with the active layer when the electromagnetic wave is transmitted through the active layer, thereby interfering with a signal generated by the device. For example, when the device is an electro-optical modulator, the applied electric field could give rise to electro-optical modulation itself, or could give rise to higher-order effects.

In other embodiments, the electric field may be maintained during step b. This is particularly preferred when the lifetime of the first and/or second state is relatively short (e.g., compared to the duration of step b). The lifetime of the first and/or second state may be limited, for example, by thermally induced switching of the chromophore from the first to the second state or vice versa. It is an advantage of these embodiments that modulation of the response may be fast, e.g., the response may disappear as soon as the electric field is switched off.

In embodiments, the electromagnetic wave may be introduced in the second-order nonlinear optical device through an input optical waveguide. The device typically generates a secondary electromagnetic wave. In embodiments wherein the device is an electro-optical modulator, the secondary electromagnetic wave may be phase-shifted with respect to the electromagnetic wave. In embodiments wherein the device is a second harmonic generator, the secondary electromagnetic wave may be frequency-doubled with respect to the electromagnetic wave. In embodiments, the secondary electromagnetic wave, and possibly the electromagnetic wave, may be collected from the second-order nonlinear optical device through an output optical waveguide. It is an advantage of embodiments of the present invention that good control of the direction of the electromagnetic wave and the secondary electromagnetic wave may be achieved.

In embodiments, any feature of any embodiment of the second aspect may independently be as correspondingly described for any embodiment of any of the other aspects.

In a third aspect, the present invention relates to a use of an active layer for second-order nonlinear optical applications. The active layer comprises: (ia) a matrix material, and (ib) second-order nonlinear optical chromophores dispersed in the matrix material. Each chromophore has a conjugated system comprising at least a first nitrogen atom connected to a second nitrogen atom via a conjugated path and a positive charge localized on one of the nitrogen atoms. Moreover, the chromophore is switchable between a first state in which the positive charge is localized on the first nitrogen atom and a second state in which the positive charge is localized on the second nitrogen atom, and under thermal equilibrium both states are populated.

In embodiments, any feature of any embodiment of the third aspect may independently be as correspondingly described for any embodiment of any of the other aspects.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

## Example 1: Symmetrically substituted chromophores with a huge second-order nonlinear optical response

In a first example, the second-order nonlinear optical response of a range of chromophores was determined. Firstly, a systematic series of structurally analogous symmetric cyanine dyes with widely varying conjugation lengths was investigated. Cyanines contain a first nitrogen atom connected to a second nitrogen atom via a conjugated path, and a positive charge that may be localized on one of the nitrogen atoms. The cyanine dyes C2-C7 are shown below and are labelled after the number of double bonds between the two nitrogen atoms bearing the charges.

C2

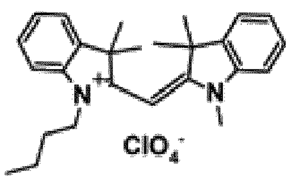

C3

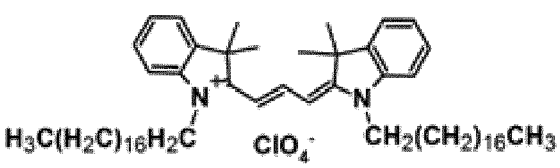

C4

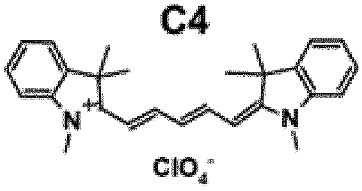

C5

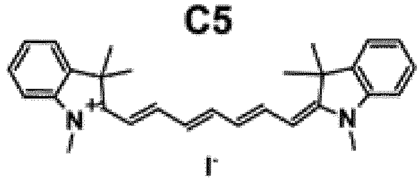

C6

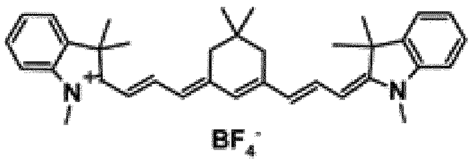

C7

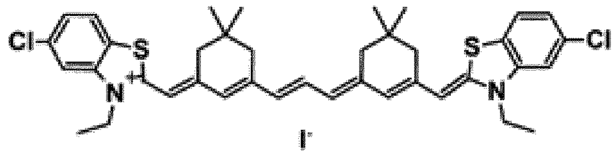

.

Furthermore, a centrosymmetric squaraine SQ was investigated having the following structure:

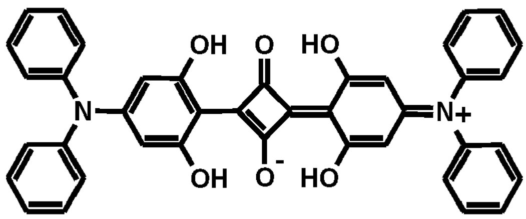

.

SQ contains a first nitrogen atom connected to a second nitrogen atom via a conjugated path, and a positive charge, due to charge separation induced by the strongly electron-withdrawing central 3-oxocyclobut-1-enolate group, i.e., the "squarylium" ring. The positive charge may be localized on one of the nitrogen atoms.

Furthermore, the symmetrical structures Sym1-3 were investigated for comparison. Sym1-3 contain a first nitrogen atom connected to a second nitrogen atom via a conjugated path, but that do not contain a positive charge that may be localized on one of the nitrogen atoms. Therefore, it is expected that charge localization does not occur for Sym1-3.

Sym1

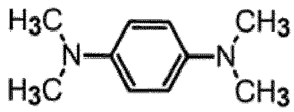

Sym2

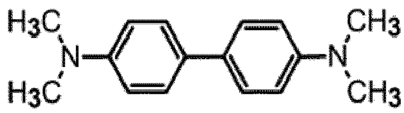

Sym3

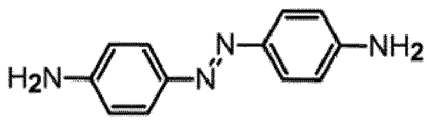

.

Finally, the asymmetrically substituted para-nitroaniline (pNA) was investigated, which is a classical push-pull chromophore, and is well-known in the field of second-order nonlinear optics:

*p*NA

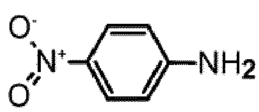

.

Compounds C2, C3 (≥98.0%), C5 (97%), Sq (98%) and Sym3 were purchased from Sigma-Aldrich, C4, C6 and C7 from Spectrum Info, Sym1 (98%) and Sym2 (97.5%) from Acros, and pNA (99+%) from Janssen Chimica.

For the measurements performed in the example, the compounds were dissolved in a solvent. Methanol (max. 0.05% water) was purchased from Vel, deuterated methanol (<0.03% water, 99.8% D) from VWR, acetonitrile (HPLC grade for gradient analysis) and chloroform (99.9%, for residue analysis) from Acros, and benzene (for spectroscopy) from Merck. All chemicals were used as received.

The molecular second-order nonlinear optical response of the compounds, i.e., their molecular first hyperpolarizabilities $\beta$, were determined employing hyper-Rayleigh scattering (HRS). HRS is incoherent second harmonic light scattering from randomly oriented chromophores (TERHUNE, R. W.; MAKER, P. D.; SAVAGE, C. M. Measurements of nonlinear light scattering. Physical Review Letters, 1965, 14.17: 681. and CLAYS, Koen; PERSOONS, Andre. Hyper-Rayleigh scattering in solution. Physical review letters, 1991, 66.23: 2980.). The HRS setup used for the measurements has been previously described by Campo et al. (CAMPO, Jochen, et al. Highly sensitive setup for tunable wavelength hyper-Rayleigh scattering with parallel detection and calibration data for various solvents. Optics express, 2009, 17.6: 4587-4604.). In short, the HRS setup contains a Ti:Sapphire chirped-pulse regenerative amplifier (Spectra-Physics Spitfire) that is pumping a dual-stage optical parametric amplifier (Spectra-Physics OPA-800CP, pulse duration ~2ps, repetition rate = 1kHz). Parallel detection of a narrow wavelength range around the second harmonic is achieved by the use of a liquid nitrogen cooled CCD coupled to a spectrograph, enabling fast and complete correction for any multi-photon fluorescence, which can be distinguished as a broad background. With this setup, accurate HRS measurements are possible covering an exceptionally broad wavelength range. The HRS setup is highly sensitive and allows to detect HRS signals from the pure solvents, which are used as an internal reference standard. Within good approximation, a single significant, diagonal $\beta$ tensor component along the z-axis (i.e. the direction of the elongated conjugated chain) can be assumed for the elongated conjugated chromophores. The reported results for $\beta$ are expressed in the B* convention described by Willetts et al. (WILLETTS, Andrew, et al. Problems in the comparison of theoretical and experimental hyperpolarizabilities. The Journal of chemical physics, 1992, 97.10: 7590-7599.). This convention was also used for the original reference standard value of $\beta = 0.49 \times 10^{-30}$esu for chloroform at 1064 nm (KAJZAR, F.; LEDOUX, I.; ZYSS, J. Electric-field-induced optical second-harmonic generation in polydiacetylene solutions. Physical review A, 1987, 36.5: 2210.).

Most of the HRS measurements on the cyanines were performed in acetonitrile, which has good IR transparency, and methanol. Both solvents were previously calibrated extensively and wavelength dependently against the standard chloroform (CAMPO, Jochen, et al. Highly sensitive setup for tunable wavelength hyper-Rayleigh scattering with parallel detection and calibration data for various solvents. Optics express, 2009, 17.6: 4587-4604.). SQ, and Sym1-3 were measured in chloroform solution. Samples were sufficiently diluted to keep the signal correction for reabsorption of the second harmonic light limited (correction ≤ 10%, absorbance < 0.5/cm). The solutions were stirred during the measurements to continuously refresh the exposed chromophores (limiting local heating and the effect of local decomposition in the laser beam, if any), and linear absorption spectra were recorded before and after each HRS measurement to check for decomposition.

In general, HRS measurements were performed at various concentrations (varying over about an order of magnitude), and absorption spectra were checked to follow Lambert-Beer's law, thus showing no signs of aggregation. All cyanines except C2 showed a very strong background of multi-photon fluorescence in the wavelength range of their main absorption peak and its long-wavelength side, preventing HRS measurements with the second-harmonic wavelength too close to this region. To reduce the multi-photon induced fluorescence background we performed measurements at extremely long fundamental wavelengths, i.e. 1800, 1950 and even 2050 nm, avoiding the NIR absorption peaks of acetonitrile. The dots in FIG 2 indicate the $\beta$ for each wavelength measured and the solid lines correspond to the fitted $\beta$ dispersion models. Herein, the top horizontal axis indicates the fundamental wavelength $\lambda_\omega$, and the bottom horizontal axis indicates the second harmonic wavelength $\lambda_{2\omega}$. The vertical axis on the left indicates the magnitude of $\beta$. The dashed curves are the absorption spectra of the respective cyanine. The vertical axis on the right indicates the extinction coefficient $\varepsilon$ (in $10^4$ L $mol^{-1}$ $cm^{-1}$).

We applied a vibronic $\beta$ dispersion model that we developed before (HIV model in reference CAMPO, Jochen, et al. Practical model for first hyperpolarizability dispersion accounting for both homogeneous and inhomogeneous broadening effects. The journal of physical chemistry letters, 2012, 3.16: 2248-2252.), which includes both homogeneous and inhomogeneous line broadening and yet is fully consistent with the experimental absorption spectrum. This model is capable of a quantitatively accurate modelling of the $\beta$ dispersion throughout the resonance peak and involves only a single shape-determining free parameter, the amount of inhomogeneous line broadening, $G_{inhom}$, in addition to the overall amplitude.

Reference is made to FIG 3, where the normalized absorption A of absorption spectra and fits to said spectra of the cyanines C3-C7, as dependent on wavelength $\lambda$, are shown. The component of the absorption band corresponding to the symmetry-broken form of the cyanines (henceforth denoted as the SB band) was extracted from spectra recorded in different polarity solvents by making use of the fact that this SB band (being nearly absent in apolar solvents) increases

strongly with solvent polarity while the sharp component (typical for cyanines) only slightly shifts spectrally, and assuming that the difference in shape between the overall spectra in the solvents with different polarity is solely due to a different degree of symmetry breaking. In particular, the SB band was extracted by fitting the absorption spectrum in acetonitrile (solid line) with a linear combination of a slightly spectrally shifted copy of the absorption spectrum in dichloromethane (dotted line; taking into account the negative solvatochromism) and a single Gaussian band (dashed line), treating the spectral shift, the relative amplitudes of the spectrum in dichloromethane and the Gaussian band, and the position and width of the Gaussian band as fit parameters. This approach can be used for all cyanines but the shortest one, i.e., C2 (which is therefore not included in FIG 3), as the spectrum of the latter compound in these two solvents exhibits no significant differences. The latter was not a problem because the availability of HRS data very far from resonance for this compound renders the extrapolation to the static limit insensitive to the exact position and shape of the absorption band used in the model. Therefore, instead, for C2 we simply used the entire absorption band and $G_{inhom}$=0 as before.

Applying the aforementioned vibronic $\beta$ dispersion model (HIV), fully based on the SB band only, yields in all cases an excellent description of the HRS data (see FIG.2, full lines) including the extreme case of the longest cyanine C7, confirming that this broad sideband indeed gives the dominant contribution to $\beta$ and thus that spontaneous symmetry breaking is effectively at the origin of the large first hyperpolarizabilities. Table A summarizes the static first hyperpolarizabilities $\beta_0$ obtained. For SQ, a similar modelling was performed. The $\beta_0$ derived for the SQ is included in Table A.

Table A. Static first hyperpolarizabilities $\beta_0$ obtained for the chromophores

| **Chromophore** | $\beta_0$ |
|---|---|
| C2 | 16.1[f] ($\pm$0.5) |
| C3 | 46.6 ($\pm$0.35) |
| C4 | 176 ($\pm$17.6) |
| C5 | 734 ($\pm$73.4) |
| C6 | 1474 ($\pm$147.4) |
| C7 | 2167 ($\pm$216.7) |
| SQ | 163 |

Similar measurements were performed on Sym1-3 and pNA. The well-known two-level model was fitted to the data for these compounds. Calculated $\beta_0$ for Sym1-3 and pNA is summarized in Table B. The response of Sym1-3 is, as expected, very low, proving that the localization of the positive charge on one of the nitrogen atoms is the cause of the large response for the cyanines and SQ.

Also further compounds in literature with very large second-order nonlinear optical responses, but that are classical, asymmetrically substituted push-pull chromophores, are included in Table B. Herein, DR1 is from CAMPO, Jochen, et al. Highly sensitive setup for tunable wavelength hyper-Rayleigh scattering with parallel detection and calibration data for various solvents. Optics express, 2009, 17.6: 4587-4604. PQDM is from CAMPO, Jochen, et al. Practical model for first hyperpolarizability dispersion accounting for both homogeneous and inhomogeneous broadening effects. The journal of physical chemistry letters, 2012, 3.16: 2248-2252. Davies et al. is from DAVIES, Joshua A., et al. Rational enhancement of second-order nonlinearity: bis-(4-methoxyphenyl) hetero-aryl-amino donor-based chromophores: design, synthesis, and electro-optic activity. Journal of the American Chemical Society, 2008, 130.32: 10565-10575.

Table B. Static first hyperpolarizabilities $\beta_0$ obtained for reference compounds

| **Chromophore** | $\beta_0$ |
|---|---|
| Sym1 | 8.9 |
| Sym2 | 13.7 |
| Sym3 | 8.7 |
| pNA | 17.2 |
| DR1 | 160 |
| PQDM | 316 |
| Davies et al. | 909 |

The static first hyperpolarizabilities of the cyanines and DR1 (51), PQDM (52) and Davies et al. (53) are plotted in FIG 4 as a function of the conjugated path length. The second-order nonlinear optical response of the cyanines is even larger than that of the classical push-pull chromophores DR1, PQDM and Davies et al. with similar lengths. Also, SQ can compete with DR1, which has a similar conjugated path length.

Clearly, but unexpectedly, the effect of localization of the positive charge on one of the nitrogen atoms results in a huge molecular second-order nonlinear optical response. This makes the chromophores as used in embodiments of the present invention, unexpectedly, highly interesting for second-order nonlinear optical applications.

**Example 2: Second-order nonlinear optical device**

Reference is made to FIG 5, which is a schematic representation of a vertical cross-section of part 1 of a second-order nonlinear optical device according to embodiments of the present invention. The device comprises an active layer 11 and an electric field generator 12. The active layer 11 comprises second-order nonlinear optical chromophores as may be used in embodiments of the present invention, for example, a cyanine or a squaraine from example 1. In this example, the electric field generator 12 comprises a first plate 121 and a second plate 122. The active layer 11 is located between the first 121 and second plate 122. An electric field may be applied by application of potential via connection 123.

Reference is made to FIG 6, which is a schematic representation of a vertical cross-section of an active layer 11. The active layer 11 further comprises a matrix material (not shown) in which the second-order nonlinear optical chromophores 111 (in this example cyanines) are dispersed. In this example, the matrix material may prevent reorientation of the chromophores 111. The invention is however not limited thereto. Typically, the active layer 11 is isotropic and the chromophores are randomly oriented. A first chromophore with an inverse orientation to a second chromophore in the active layer 11, has a second-order nonlinear optical response that is inverse of a second-order nonlinear optical response of the second chromophore. In case of random orientation of the chromophores 111, the second-order nonlinear optical response of all chromophores 111 in the active layer 11 adds up to zero. An electric field may be applied by the electric field generator 12 over the active layer 11, in this example along the z-axis. In this example, thereby, at least some of the chromophores 111 may be switched from a first state to a second state or from the second state to the first state.

Reference is made to FIG 7. The switching occurs such that, in this example, the positive charge on at least some of the chromophores 111 moves, within the chromophore 111, from one of the nitrogen atoms, in the direction of z, to another of the nitrogen atoms. Thereby, the switching results in a layer wherein the chromophores 111 are no longer randomly ordered. The second-order nonlinear optical response along z of each chromophore 111 in the active layer 11 no longer cancel each other and add up to a nonzero second-order nonlinear optical response along z.

Reference is made to FIG 8, which is a schematic representation of an electro-optical modulator according to embodiments of the present invention. In this example, the second-order nonlinear optical device 2 is a Mach-Zehnder type electro-optical modulator. Mach-Zehnder type electro-optical modulators are well-known in the field. Herein, an electromagnetic wave, e.g., laser light polarized along z, from an input waveguide 21 is equally divided between a first arm 221 and a second arm 222. Herein, the first arm 221 comprises the active layer. In this example, the electric field generator 12 may have two functions. First, an electric field is applied, e.g., along z, to switch at least some of the chromophores in the active layer 11 from the first state to the second state or from the second state to the first state. Thereby, as explained above, the nonzero second-order nonlinear optical response along z becomes nonzero, i.e., the sum of the nonzero second-order nonlinear optical response along z for each chromophore. Next, a further electric field is applied so as to change the refractive index in the first arm 221. Depending on the magnitude of the further electric field, the part of the electromagnetic wave transmitted through the first arm 221 and the part of the electromagnetic wave transmitted through the second arm 222 may either destructively or constructively interfere with recombination in the output waveguide 23.

Both the electric field to switch the chromophores, and the further electric field to change the refractive index may be applied alternately or at the same time. Preferably-at least when the electric field and the further electric field are applied at the same time-, a field strength of the further electric field is lower than a field strength of the electric field; in such a way that the electric field dominates the switching of the chromophores, while the further electric field may not induce switching of the chromophores.

It is to be understood that although preferred embodiments, specific constructions, configurations and materials have been discussed herein to illustrate the present invention. It will be apparent to those skilled in the art that various changes or modifications in form and detail may be made without departing from the scope of the invention as defined in the appended claims.

## Claims

1. A second-order nonlinear optical device, comprising:

    (i) an active layer comprising

        (ia) a matrix material, and
        (ib) second-order nonlinear optical chromophores dispersed in the matrix material, each chromophore having a conjugated system comprising at least

            - a first nitrogen atom connected to a second nitrogen atom via a conjugated path and
            - a positive charge localized on one of the nitrogen atoms,

        wherein the chromophore is switchable between a first state in which the positive charge is localized on the first nitrogen atom and a second state in which the positive charge is localized on the second nitrogen atom, and wherein under thermal equilibrium both states are populated; and

    (ii) an electric field generator for switching at least some of the chromophores from the first state to the second state or from the second state to the first state, or for reorienting at least some of the chromophores.

2. The second-order nonlinear optical device according to claim 1, wherein two halves of the chromophore-each containing one of said nitrogen atoms-are defined by:

    (a) dividing the conjugated path in two fractions by making a plane cut midway between said nitrogen atoms, and then

    for each fraction:

    (b) removing any partial atoms and bonds thereto,
    (c) shifting-if needed-the alternating single and double bonds of the conjugated path so that the bond thereof connecting to the nitrogen atom is a single bond, and
    (d) completing any dangling bonds by adding a hydrogen substituent; and

    wherein an ionisation potential of each half of the chromophore-as calculated using MOPAC with the PM7 Hamiltonian-differs by less than 0.45 eV from each other.

3. The second-order nonlinear optical device according to any of the previous claims, wherein the second ground state is mirror symmetric to or rotationally superimposable on the first ground state.

4. The second-order nonlinear optical device according to any of the previous claims, wherein the electric field generator is for applying a DC electric field.

5. The second-order nonlinear optical device according to any of the previous claims, wherein the conjugated path comprises a series of unsaturated carbon atoms.

6. The second-order nonlinear optical device according to any of the previous claims, wherein the conjugated path comprises at least seven atoms, preferably at least nine atoms, more preferably at least eleven atoms.

7. The second-order nonlinear optical device according to any of the previous claims, wherein the first nitrogen and/or the second nitrogen is part of an aromatic group.

8. The second-order nonlinear optical device according to any of the previous claims, wherein the chromophore comprises a cyanine or a squaraine, preferably a cyanine.

9. The second-order nonlinear optical device according to any of the previous claims, wherein the matrix material comprises a polymer.

10. The second-order nonlinear optical device according to any of the previous claims, wherein two or more of the

chromophores are covalently attached to a common backbone.

**11.** The second-order nonlinear optical device according to any of the previous claims, wherein the device is an electro-optical modulator or a second harmonic generator.

**12.** A method for using the second-order nonlinear optical device as defined in any of the previous claims, comprising:

(a) applying an electric field across the active layer so as to switch at least some of the chromophores from the first ground state to the second ground state or from the second ground state to the first ground state, or so as to reorient at least some of the chromophores; and
(b) transmitting an electromagnetic wave through the active layer.

**13.** The method according to claim 12, wherein the electric field is switched off before step b.

**14.** The method according to claim 12, wherein the electric field is maintained during step b.

**15.** Use of an active layer comprising:

(ia) a matrix material, and
(ib) second-order nonlinear optical chromophores dispersed in the matrix material, each chromophore having a conjugated system comprising at least

- a first nitrogen atom connected to a second nitrogen atom via a conjugated path and
- a positive charge localized on one of the nitrogen atoms,

wherein the chromophore is switchable between a first state wherein the positive charge is localized on the first nitrogen atom and a second state wherein the positive charge is localized on the second nitrogen atom, and wherein under thermal equilibrium both states are populated;
for second-order nonlinear optical applications.

# FIG 1

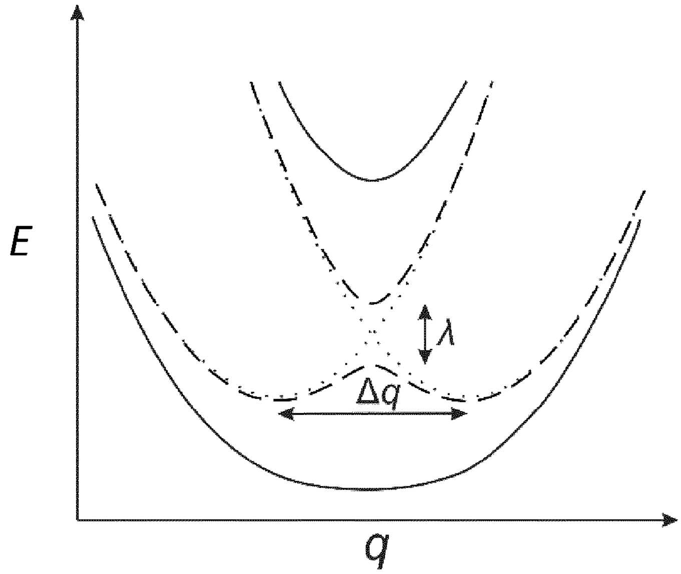
E
λ
Δq
q

# FIG 2

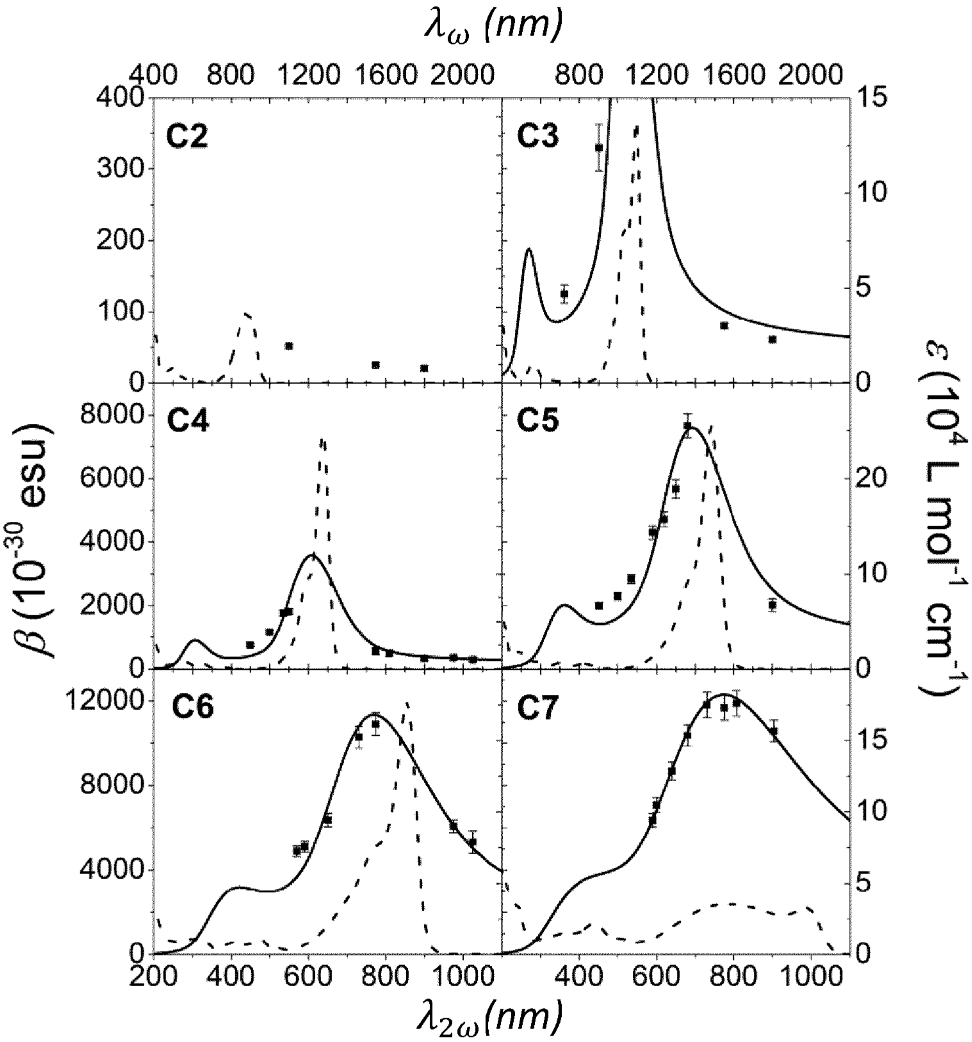
$\lambda_\omega$ (nm)
400 800 1200 1600 2000
800 1200 1600 2000
C2
C3
C4
C5
C6
C7
$\beta$ ($10^{-30}$ esu)
$\varepsilon$ ($10^4$ L mol$^{-1}$ cm$^{-1}$)
$\lambda_{2\omega}$(nm)
200 400 600 800 1000
400 600 800 1000

# FIG 3

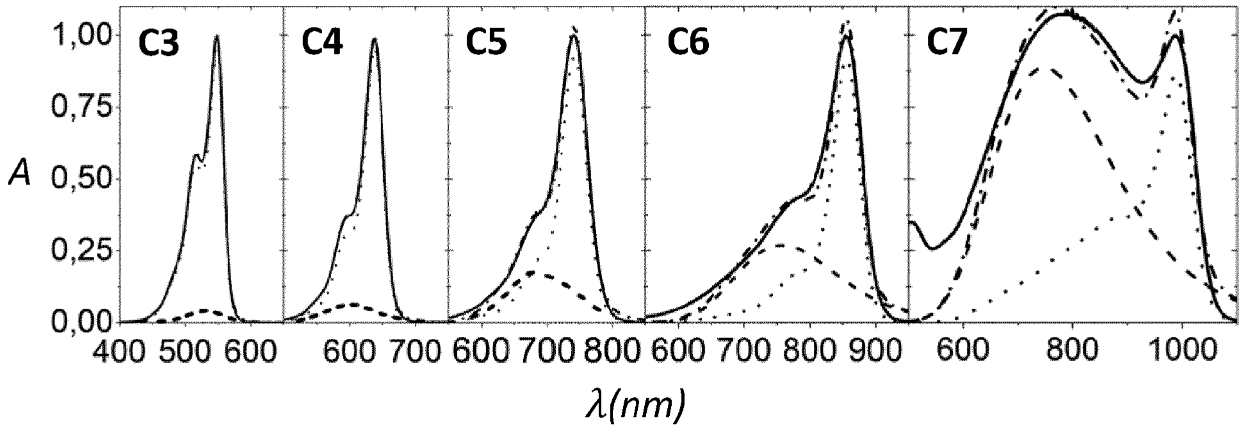


# FIG 4

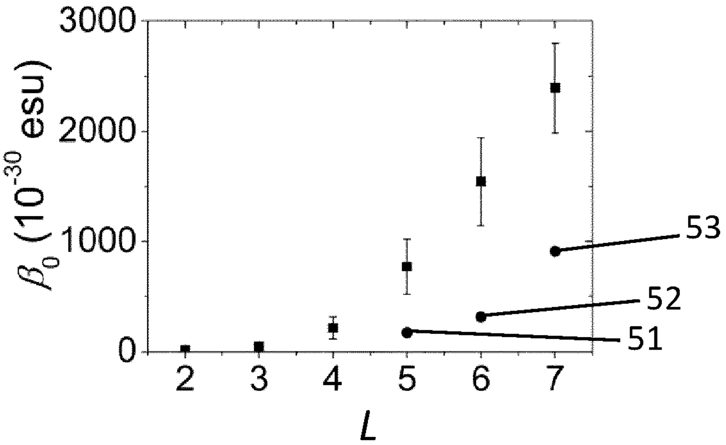


# FIG 5

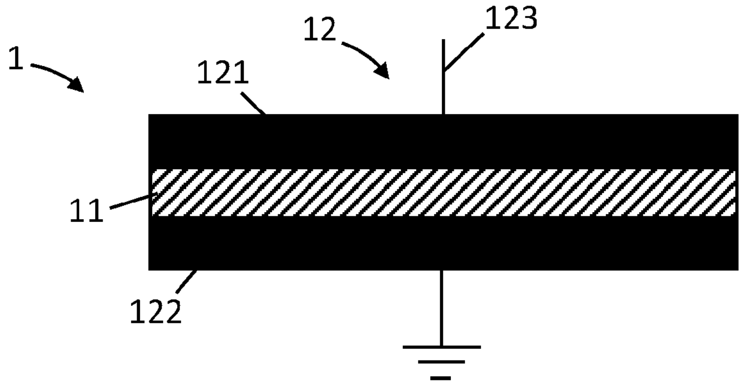

FIG 6

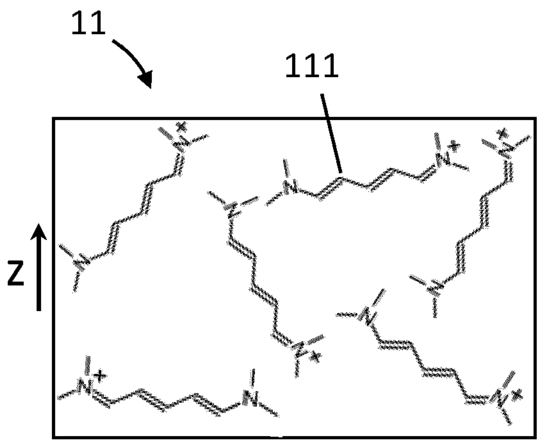


FIG 7

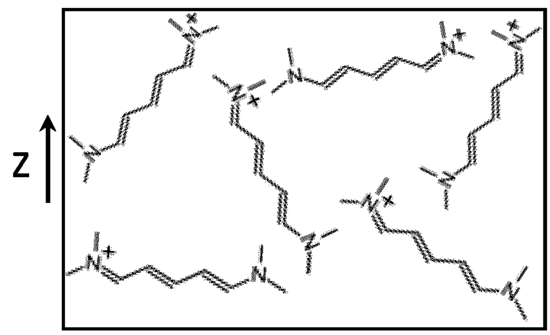


FIG 8

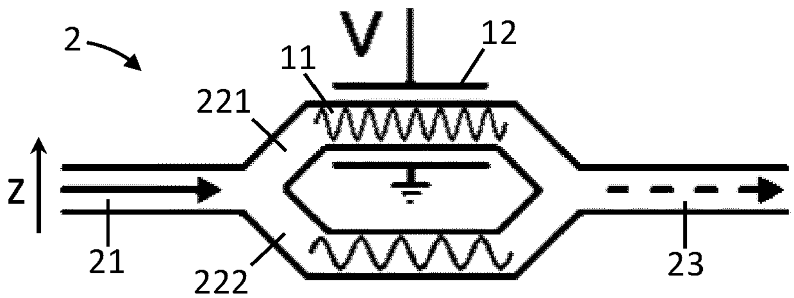

Europäisches Patentamt
European Patent Office
Office européen des brevets

# EUROPEAN SEARCH REPORT

Application Number
EP 21 20 0184

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/149618 A1 (JEN KWAN-YUE [US] ET AL) 11 June 2009 (2009-06-11)<br>* abstract; claim 1; figures 1,2,4 *<br>* paragraphs [0005], [0016], [0020] - [0032], [0037], [0039], [0040], [0043], [0046], [0051], [0076] *<br>----- | 1,4,5,7, 9,11-15 | INV.<br>G02F1/21<br>C07D333/38<br>C08F232/08<br>G02F1/361 |
| X | US 2003/107027 A1 (HUANG DIYUN [US] ET AL) 12 June 2003 (2003-06-12)<br>* abstract; claims 1-10; figures 1,2 *<br>* paragraphs [0003] - [0005], [0008], [0017], [0018] *<br>----- | 1,4,5,9, 11-15 | |
| A | CHANG C-C ET AL: "POLYMERS FOR ELECTRO-OPTICAL MODULATION", JOURNAL OF MACROMOLECULAR SCIENCE: PART C - POLYMER REVIEWS, TAYLOR & FRANCIS INC., PHILADELPHIA, PA, US,<br>vol. 45, no. 2,<br>1 January 2005 (2005-01-01), pages 125-170, XP009060062,<br>ISSN: 1532-1797<br>* the whole document *<br>----- | 1-15 | TECHNICAL FIELDS SEARCHED (IPC)<br>C08F<br>G02F<br>C07D |
| A | US 4 792 208 A (ULMAN ABRAHAM [US] ET AL) 20 December 1988 (1988-12-20)<br>* abstract *<br>* column 4, lines 5-57 *<br>----- | 1-15 | |
| A | US 2007/001154 A1 (HSU TZU-CHIEN [TW] ET AL) 4 January 2007 (2007-01-04)<br>* abstract; claims 1,2 *<br>* paragraphs [0025] - [0033] *<br>----- | 1-15 | |

1 The present search report has been drawn up for all claims

| Place of search | Date of completion of the search | Examiner |
|---|---|---|
| The Hague | 3 March 2022 | Beugin, Anne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 20 0184

This annex lists the patent family members relating to the patent documents cited in the above-mentioned European search report. The members are as contained in the European Patent Office EDP file on
The European Patent Office is in no way liable for these particulars which are merely given for the purpose of information.

03-03-2022

| Patent document cited in search report | Publication date | Patent family member(s) | Publication date |
|---|---|---|---|
| US 2009149618 A1 | 11-06-2009 | NONE | |
| US 2003107027 A1 | 12-06-2003 | CN 1829939 A | 06-09-2006 |
| | | US 2003107027 A1 | 12-06-2003 |
| | | US 2003183812 A1 | 02-10-2003 |
| | | US 2006114552 A1 | 01-06-2006 |
| US 4792208 A | 20-12-1988 | CA 1333844 C | 10-01-1995 |
| | | DE 3876934 T2 | 15-07-1993 |
| | | EP 0313474 A2 | 26-04-1989 |
| | | JP H01159618 A | 22-06-1989 |
| | | US 4792208 A | 20-12-1988 |
| US 2007001154 A1 | 04-01-2007 | US 2007001154 A1 | 04-01-2007 |
| | | US 2007004873 A1 | 04-01-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **SETH R. et al.** A unified description of linear and nonlinear polarization in organic polymethine dyes. *Science,* 1994, vol. 265.5172, 632-635
- *Journal of the American Chemical Society,* 1997, vol. 119.14, 3253-3258
- **TERHUNE, R. W. ; MAKER, P. D. ; SAVAGE, C. M.** Measurements of nonlinear light scattering. *Physical Review Letters,* 1965, vol. 14.17, 681
- **CLAYS, KOEN ; PERSOONS, ANDRE.** Hyper-Rayleigh scattering in solution. *Physical review letters,* 1991, vol. 66.23, 2980
- **CAMPO, JOCHEN et al.** Highly sensitive setup for tunable wavelength hyper-Rayleigh scattering with parallel detection and calibration data for various solvents. *Optics express,* 2009, vol. 17.6, 4587-4604
- **WILLETTS, ANDREW et al.** Problems in the comparison of theoretical and experimental hyperpolarizabilities. *The Journal of chemical physics,* 1992, vol. 97.10, 7590-7599
- **KAJZAR, F. ; LEDOUX, I. ; ZYSS, J.** Electric-field-induced optical second-harmonic generation in polydiacetylene solutions. *Physical review A,* 1987, vol. 36.5, 2210
- **CAMPO, JOCHEN et al.** Practical model for first hyperpolarizability dispersion accounting for both homogeneous and inhomogeneous broadening effects. *The journal of physical chemistry letters,* 2012, vol. 3.16, 2248-2252
- **DAVIES, JOSHUA A. et al.** Rational enhancement of second-order nonlinearity: bis-(4-methoxyphenyl) hetero-aryl-amino donor-based chromophores: design, synthesis, and electro-optic activity. *Journal of the American Chemical Society,* 2008, vol. 130.32, 10565-10575